# EUROPEAN PATENT APPLICATION

(11) **EP 3 162 525 A1**
(43) Date of publication of application: **03.05.2017**
(21) Application number: 15814756.1
(22) Date of filing: 23.06.2015
(51) Int. Cl.: B29C 39/24, B29C 39/10, B68G 7/05, F16B 5/12, B29K 105/04, B29L 31/58

(54) **FOAMED RESIN MOLDING MANUFACTURING METHOD AND FOAMED RESIN MOLDING**

(30) Priority: 30.06.2014 JP 2014134653
(71) Applicant: Bridgestone Corporation, Tokyo 104-8340 (JP)
(72) Inventor: KUROKI, Hiroyuki, Tokyo 104-8340 (JP)
(74) Representative: Oxley, Robin John George
(86) International application number: PCT/JP2015/068057
(87) International publication number: WO 2016/002588

(57) **Abstract**

To provide a foamed resin molding manufacturing method that attains simplification of work of setting a covering material locking clip to a foamed resin molding. A method for manufacturing a foamed resin molding that is provided in advance with a covering material locking clip has: a temporary fastening step of temporarily fastening the clip (12) to a clip installation jig (10); a jig installing step of installing the clip installation jig (10) with the clip (12) temporarily fastened thereto in a forming die (16) such that the clip (12) is located at a determined positon; a molding step of injecting foamed resin into the forming die (16) to mold the foamed resin molding (18); and a step of removing the clip installation jig (10) from the foamed resin molding (18) after the foamed resin molding (18) is demolded.

## Description

### Technical Field

The present invention relates to a foamed resin molding manufacturing method and a foamed resin molding, and particularly to a method for manufacturing a foamed resin molding, and a foamed resin molding provided in advance with a clip for a covering material at a predetermined position.

### Background Art

Foamed resin moldings used as pads of vehicular seats, sofas installed in houses, and the like are manufactured by pouring polyurethane foam or the like into a forming die. On a surface of the foamed resin molding, a covering material is mounted. A groove is formed in the foamed resin molding in order to mount the covering material, and clips for locking the covering material are buried in a bottom surface of this groove at a predetermined interval. A locking tool provided in the covering material is locked to the clips, that is, a part of the covering material is locked in the groove, so that the covering material is firmly mounted on the surface of the foamed resin molding.

Conventionally, the clips for locking the locking tool of the covering material are set to the forming die of a foamed resin molding one by one to be buried in the foamed resin molding (refer to Patent Literature 1). Additionally, in a molding of the foamed resin molding, the clips are not buried, a linear object is buried, and the foamed resin molding is demolded, and thereafter the clips are engaged with this linear object, so that the locking tool of the covering material is locked to the clips (refer to Patent Literature 2).

### Prior Art Literature

### Patent Literature

Patent Literature 1: JP-A 2011-69417
Patent Literature 2: JP-A 2011-45424

### Problems to be solved by the Invention

In a case where the number of clips to be buried in the foamed resin molding is increased, and the locking tool of the covering material is intended to be locked to the more clips, in a method of Patent Literature 1, the clips are set to the forming die one by one, and therefore a lot of work and time are taken, which is complicated. Particularly, while the forming die moves on a rail, a material injection step, a mold clamping step, and a heat foaming formation step are performed, and therefore time required for setting the clips to the forming die is limited, and it is not easy to set the clips within the limited time.

Additionally, in a method of engaging the clips with the linear object buried in the foamed resin molding, and locking the locking tool of a cover member to these clips, described in Patent Literature 2, work of engaging the clips to the linear object buried in a bottom of the groove is performed in the groove, and therefore the work is complicated and a long time is required.

The present invention has been made in view of the above problems, and an object of the present invention is to provide a foamed resin molding manufacturing method that attains simplification of work of setting a covering material locking clip to a foamed resin molding.

### Means to solve the Problems

In order to achieve the above object, a method for manufacturing a foamed resin molding that is provided in advance with a covering material locking clip at a predetermined position recited in claim 1, the foamed resin molding manufacturing method has: a temporary fastening step of temporarily fastening the clip to a clip installation jig; a jig installing step of installing the clip installation jig with the clip temporarily fastened thereto in a forming die such that the clip is located at a determined positon; a molding step of injecting foamed resin into the forming die to mold the foamed resin molding; and a jig removing step of removing only the clip installation jig from the foamed resin molding after the foamed resin molding is demolded.

According to this method, after the clip is temporarily fastened to the clip installation jig, the clip installation jig with the clip temporarily fastened thereto is set in the forming die such that the clip is located at the determined positon. Thereafter, the molding step and the jig removing step are performed. Therefore, the clip can be temporarily fastened at the predetermined position in the clip installation jig in advance before installation to the forming die. Additionally, subsequent installation of the clip installation jig with the clip temporarily fastened thereto to the forming die can be performed at a time, and work of setting the clip to the foamed resin molding is simplified.

That is, even in a case where the number of clips is large, complicated work is avoided by the temporary fastening work of the clip to the clip installation jig by simple work in advance, and simple installation work of the clip installation jig. As a result, manufacturing of the foamed resin molding with the covering material locking clip buried therein is simplified. Additionally, the clip installation jig is removed after molding, and therefore there is no adverse effect on the foamed resin molding due to existence of the jig.

According to the foamed resin molding manufacturing method recited in claim 2, in the foamed resin molding manufacturing method recited in claim 1, the clip has a base section and a locking section formed so as to protrude from the base section, the temporary fastening step is performed by locking the clip installation jig to the locking section of the clip, and the jig installing step is performed such that the base section is buried in the molding step, and at least a leading end of the locking section is exposed from the foamed resin molding.

By this method, the temporary fastening step can be easily performed by locking the clip installation jig to the locking section. Additionally, the base section of the clip is buried in the foamed resin molding, and therefore coupling between the clip and the foamed resin molding is strengthened. Additionally, at least the leading end of the locking section is exposed, and therefore the jig removing step can be easily performed.

According to the foamed resin molding manufacturing method recited in claim 3, in the foamed resin molding manufacturing method recited in claim 1 or 2, the jig removing step is performed by separating the clip installation jig from the locking section of the clip exposed from the foamed resin molding to take the clip installation jig outside the foamed resin molding. Therefore, the clip installation jig only needs to be separated from the locking section, and to be taken outside the foamed resin molding, and therefore it is possible to easily remove the clip installation jig without damage to the foamed resin molding.

According to the foamed resin molding manufacturing method recited in claim 4, in the foamed resin molding manufacturing method recited in any one of claims 1 to 3, a mold releasing agent is applied to an outer peripheral surface of the clip installation jig before the temporary fastening step. Therefore, the mold releasing agent is applied, so that separation of the clip installation jig from the clip is smoothly performed without any influence on the temporary fastening step, the jig installing step, and the molding step, and simplification of work in the jig removing step is attained.

According to the foamed resin molding manufacturing method recited in claim 5, in the foamed resin molding manufacturing method recited in any one of claims 1 to 3, the clip installation jig is coated with non-polar resin before the temporary fastening step. Non-polar resin, for example, polypropylene resin has a property of being hardly adhered to urethane foam of a foamed resin product. Therefore, separation of the clip installation jig from the clip is smoothly performed without any influence on the temporary fastening step, the jig installing step, and the molding step, and simplification of work in the jig removing step is attained.

According to a foamed resin molding recited in claim 6, in the foamed resin molding formed in a state where a covering material locking clip is buried at a predetermined position in advance, the clip is installed at a position corresponding to a clip locking place of the covering material without any clip installation jig, and a locking section of the clip is exposed in a state where the locking operation is possible.

The foamed resin molding according to this configuration is the foamed resin molding manufactured by the manufacturing method recited in claims 1 to 5, the suitable number of the clips are installed at suitable places by simple work, any clip maintaining jig does not exist at a time of completion, and the foamed resin molding is lightweight and has an excellent cushioning characteristic.

### Effects of the Invention

According to the foamed resin molding manufacturing method and the foamed resin molding of the present invention, the work of temporarily fastening the clip to the clip installation jig can be simply performed in advance, and thereafter the jig is installed in the forming die, so that the suitable number of the covering material locking clips can be installed at suitable places. Consequently, the work of setting the covering material locking clip to the foamed resin molding is simplified. Therefore, manufacturing of the foamed resin molding with the covering material locking clip buried therein is simplified, a manufacturing time is shortened, and the quality of the product of the foamed resin molding is improved.

### Brief Explanation of the Drawings

[Fig. 1] Fig. 1 is a schematic perspective view of a forming die, and a clip installation jig with clips temporarily fastened thereto, used in a foamed resin molding manufacturing method of the present invention.
[Fig. 2] Fig. 2(a) is a perspective view of the clip, Fig. 2(b) is a plan view of the clip, Fig. 2(c) is a front view of the clip, and Fig. 2(d) is a side view of the clip.
[Fig. 3] Fig. 3(a) is an enlarged explanatory diagram of the clip installation jig with the clips temporarily fastened thereto, and Fig. 3(b) illustrates a state where the clip installation jig is installed in the forming die.
[Fig. 4] Fig. 4 is a schematic perspective view of the clips right after the foamed resin molding is demolded.
[Fig. 5] Fig. 5 is a schematic sectional view of the clip and the clip installation jig buried in the foamed resin molding.

### Embodiments for carrying out the Invention

An embodiment of the present invention will be hereinafter described in detail with reference to the drawings. A method for manufacturing a foamed resin molding that is provided in advance with a covering material locking clip at a predetermined position of the present invention has the following steps. That is, the foamed resin molding manufacturing method has the steps of: temporarily fastening the clip to a clip installation jig at a predetermined interval; installing the clip installation jig with the clip temporarily fastened thereto in a forming die such that the clip is located at a determined positon; injecting foamed resin into the forming die to mold the foamed resin molding; and removing the clip installation jig from the foamed resin molding after the foamed resin molding is demolded.

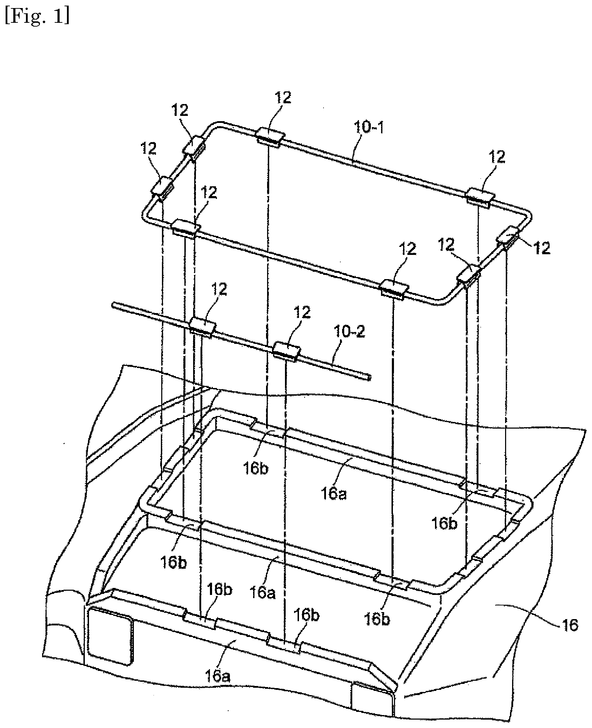

Fig. 1 is a schematic perspective view illustrating operation of installing a clip installation jig with clips temporarily fastened thereto in a forming die, according to the embodiment of the present invention, and illustrates a clip installation jig 10 with the clips 12 temporarily fastened thereto, in a forming die 16.

The clips 12 are temporarily fastened to the clip installation jig 10 in advance. This temporary fastening work is performed before the clip installation jig 10 installed in the forming die 16, and therefore this work is further facilitated.

The forming die 16 is formed with rib-like protrusions 16a for forming grooves of a foamed resin molding. Recesses 16b are formed in the rib-like protrusions 16a in order to easily set the clips 12 at predetermined positions. This position setting of the recesses 16b is set as suitable positions of clips in the completed foamed resin molding.

Therefore, the work of temporarily fastening the clips 12 to the clip installation jig 10 in advance is performed such that the clips 12 are located at the corresponding respective recesses 16b when the clip installation jig 10 is installed in the forming die 16. For example, marks for indicating mounting places of the clips 12 or the like are formed or displayed in the clip installation jig 10 in advance, so that the temporary fastening work of the clips 12 is greatly facilitated.

Therefore, the clip installation jig 10 with the clips 12 temporarily fastened thereto are set such that the clips 12 are located at the respective recesses 16b, so that the clips 12 are easily and correctly installed in the forming die 16.

The clip installation jig 10 is a wire made of metal, in this embodiment. In the embodiment of Fig. 1, a frame-shaped quadrangular clip installation jig 10-1 and a linear clip installation jig 10-2 are used. These are formed so as to match shapes of the rib-like protrusions 16a of the forming die 16.

In the quadrangular clip installation jig 10-1, the eight clips 12 are temporarily fastened. In the linear clip installation jig 10-2, the two clips are temporarily fastened. The clip installation jig 10 with these clips 12 temporarily fastened thereto are installed in the forming die 16 such that the positions of the clips 12 match the positions of the recesses 16b of the rib-like protrusions 16a (jig installing step), so that all of a plurality of the necessary clips are set in the forming die 16 at a time.

The clips 12 have locking sections as described below, and are located such that the locking section sides are located at the outside of a molding and only leading ends of the locking sections are exposed.

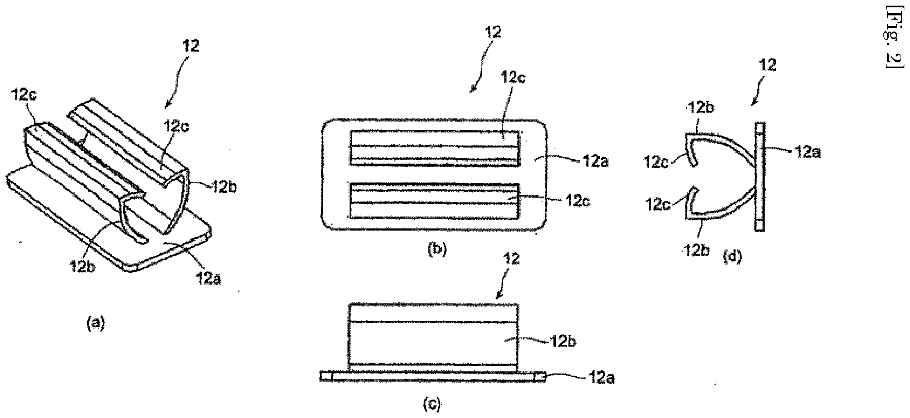

Fig. 2(a) is a perspective view of the clip, Fig. 2(b) is a plan view of the clip, Fig. 2(c) is a front view of the clip, and Fig. 2(d) is a side view of the clip. The clips 12 each have a flat plate-like base section 12a, and have locking sections 12b, 12b facing each other and protruding in the direction perpendicular to a surface of the base section 12a. As illustrated in Fig. 1, the clips 12 are installed such that the flat plate-like base sections 12a are located on the inner side when the molding is completed, and therefore stability of a state where the clips 12 are buried is secured.

The leading ends 12c, 12c of the locking sections 12b, 12b of the clips 12 are formed so as to be bent in such a direction as to approach each other. These locking sections 12b, 12b are elastically deformable in such a direction as to approach each other and in such a direction as to be separated from each other.

When the clips 12 are temporarily fastened to the clip installation jig 10, the clips 12 are located at the predetermined positions of the clip installation jig 10, and the clips 12 are pressed against the clip installation jig 10 in such a direction such that the locking sections 12b, 12b of the clips 12 are separated from each other, so that the clips 12 can be mounted. Consequently, the clips 12 are held in a state where the clip installation jig 10 is locked by the locking sections 12b, 12b.

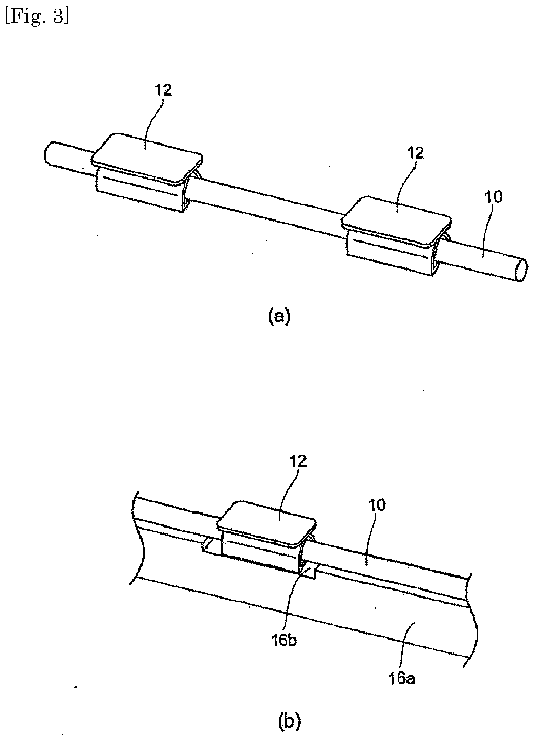

Fig. 3(a) is an enlarged perspective view of the clip portion of Fig. 1, and illustrates a state where the clips are temporarily fastened to the clip installation jig. Fig. 3(b) illustrates a state where the clip installation jig 10 with the clip 12 temporarily fastened thereto is installed such that the clip 12 is located in the recess 16b of the rib-like protrusion 16a of the forming die 16. Magnets (not illustrated) for attracting the clip installation jig 10 are buried inside the rib-like protrusions 16a of the forming die 16. Attracting force of the magnets causes the clip installation jig 10 with the clips 12 temporarily fastened thereto not to move at a time of molding of foamed resin. Furthermore, adhesion between the rib-like protrusion 16a of the forming die 16 and the clip installation jig 10 is enhanced, and the foamed resin can be prevented from moving between the clip installation jig 10 and the rib-like protrusion 16a and leaking out when the foamed resin is injected.

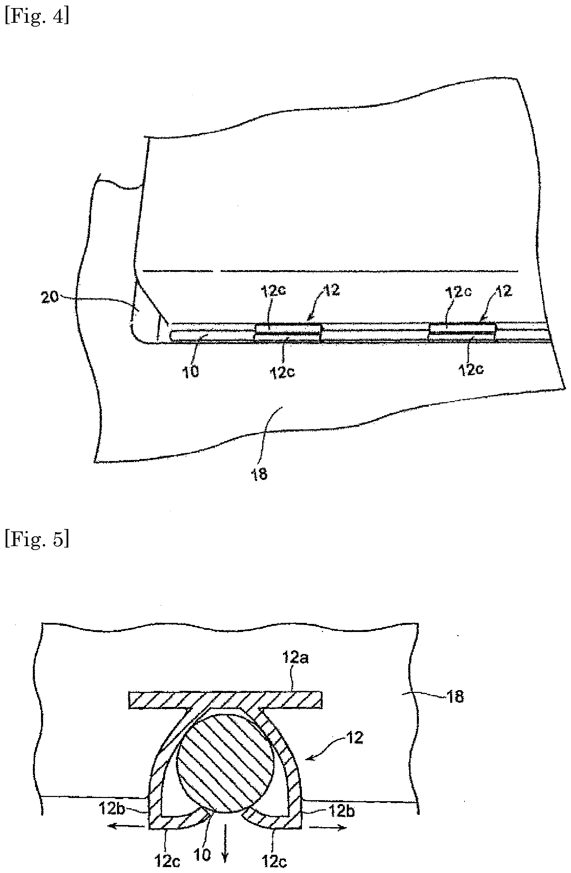

Fig. 4 is a schematic perspective view of the clips 12 disposed in the groove right after the foamed resin molding is demolded. Fig. 5 is a schematic sectional view of the clip 12 and the clip installation jig 10 buried in the foamed resin molding. The leading ends 12c, 12c of the locking sections 12b, 12b of the clip 12 are exposed from the groove 20 of the foamed resin molding 18, and the base section 12a and portions close to the locking sections 12b, 12b of the base section are buried in the foamed resin molding 18, and are not seen.

After the foamed resin molding 18 is demolded, a jig removing step of removing the clip installation jig 10 from the foamed resin molding 18 is performed as follows. Depending on adjustment of the elastic degrees of the locking sections 12b, 12b, the clip installation jig 10 can be taken out outward, or the locking sections 12b, 12b are opened in such a direction as to be separated from each other, and the clip installation jig 10 can be pulled out. Thus, the clip installation jig 10 can be easily removed. In the clip installation jig removing step of removing the clip installation jig 10, the foamed resin molding 18 is not damaged. Additionally, as seen from Fig. 5, the base sections 12a of the clips 12 are completely buried in the foamed resin molding 18, and therefore coupling of the clips 12 and the foamed resin molding 18 is strong. For example, through holes are formed in the base sections 12a of the clips 12, so that it is possible to further strengthen coupling with the foamed resin molding 18.

As described above, the clip installation jig 10 can be easily removed from the foamed resin molding 18, and therefore even when the number of the clips 12 is increased, work is not complicated. Additionally, a step of applying a mold releasing agent to a surface of the clip installation jig 10, or a step of covering a tube made of non-polar resin, for example, polypropylene on the whole of the clip installation jig 10 is performed before the temporary fastening step, so that removal of the clip installation jig 10 from the foamed resin molding 18 may be facilitated.

According to this embodiment, in the foamed resin molding 18 provided in advance with the covering material locking clips 12 at the predetermined positions is manufactured by temporarily fastening the clips 12 to the clip installation jig 10, installing the clip installation jig 10 with the clips 12 temporarily fastened thereto in the forming die 16 such that the clips 12 are located at determined positions, injecting foamed resin into the forming die 16 to mold the foamed resin molding 18, and removing the clip installation jig 10 from the foamed resin molding 18 after the foamed resin molding 18 is demolded.

That is, the temporary fastening work of the clips 12 to the clip installation jig 10 can be performed before installing the clip installation jig 10 in the forming die 16, and the work can be further facilitated. Additionally, installation of the clip installation jig 10 in the forming die 16 after the temporary fastening of the clips can be performed during a work process at a time, and work of setting the clips 12 can become extremely easy. In addition, the removed clip installation jig 10 can be used in remanufacturing, and therefore resources are saved.

Furthermore, in the foamed resin molding 18 manufactured by this manufacturing method, a state where each of the clips 12 is independently buried is secured. That is, installation in a state where no holding jig exists is attained. Therefore, reduction in weight of the foamed resin molding 18, and improvement of a cushioning characteristic are also attained.

The base sections 12a of the clips 12 are flat plate-like in this embodiment, but are not limited to this embodiment. That is, various changes can be possible without departing from the spirit of the present invention. For example, the base sections of the clips may be formed with protrusions on sides on which the base sections are buried in foamed resin. Consequently, coupling between the clips and the foamed resin molding are strengthened.

Furthermore, the clip installation jig includes the quadrangular clip installation jig and the linear clip installation jig, but is not limited to these. For example, the clip installation jig may be composed of all linear clip installation jigs.

### Explanation of Reference Numerals

- 10: clip installation jig
- 12: clip
- 12a: base section
- 12b: locking section
- 12c: leading end
- 16: forming die
- 16a: rib-like protrusion
- 16b: recess
- 18: foamed resin molding
- 20: groove

## Claims

1. A method for manufacturing a foamed resin molding that is provided in advance with a covering material locking clip at a predetermined position, the foamed resin molding manufacturing method comprising:
a temporary fastening step of temporarily fastening the clip to a clip installation jig;
a jig installing step of installing the clip installation jig with the clip temporarily fastened thereto in a forming die such that the clip is located at a determined positon;
a molding step of injecting foamed resin into the forming die to mold the foamed resin molding; and
a jig removing step of removing only the clip installation jig from the foamed resin molding after the foamed resin molding is demolded.

2. The foamed resin molding manufacturing method according to claim 1, wherein
the clip has a base section and a locking section formed so as to protrude from the base section,
the temporary fastening step is performed by locking the clip installation jig to the locking section of the clip, and
the jig installing step is performed such that the base section is buried in the molding step, and at least a leading end of the locking section is exposed from the foamed resin molding.

3. The foamed resin molding manufacturing method according to claim 1 or 2, wherein
the jig removing step is performed by separating the clip installation jig from the locking section of the clip exposed from the foamed resin molding to take the clip installation jig outside the foamed resin molding.

4. The foamed resin molding manufacturing method according to any one of claims 1 to 3, wherein
a mold releasing agent is applied to an outer peripheral surface of the clip installation jig before the temporary fastening step.

5. The foamed resin molding manufacturing method according to any one of claims 1 to 3, wherein
the clip installation jig is coated with non-polar resin before the temporary fastening step.

6. A foamed resin molding formed in a state where a covering material locking clip is buried at a predetermined position in advance, wherein
the clip is installed at a position corresponding to a clip locking place of the covering material without any clip installation jig, and a locking section of the clip is exposed in a state where the locking operation is possible.
